Europäisches Patentamt

European Patent Office

Office européen des brevets

(11) Veröffentlichungsnummer: **0 121 923**
A1

## EUROPÄISCHE PATENTANMELDUNG

(21) Anmeldenummer: **84103949.8**

(51) Int. Cl.³: **A 01 D 55/02**

(22) Anmeldetag: **10.04.84**

(30) Priorität: **12.04.83 DE 3313132**

(43) Veröffentlichungstag der Anmeldung: **17.10.84**
**Patentblatt 84/42**

(84) Benannte Vertragsstaaten: **AT CH FR IT LI NL**

(71) Anmelder: **ESM Ennepetaler Schneid- und Mähtechnik GmbH & Co. KG, Kölner Strasse 29, D-5828 Ennepetal 1 (DE)**

(72) Erfinder: **Schlasse, Manfred, Georgstrasse 11, D-5800 Hagen (DE)**
Erfinder: **Muylkens, Herbert, Steinstrasse 9, D-5828 Ennepetal 1 (DE)**

(74) Vertreter: **Patentanwälte Dipl.-Ing. Rudolf Bibrach Dipl.-Ing. Elmar Rehberg, Postfach 1453 Pütterweg 6, D-3400 Göttingen (DE)**

(54) Mähbalken.

(57) Der Mähbalken besitzt einen Balkenrücken (1) mit daran unbeweglich sitzenden Untermessern (3) und mit demgegenüber auf einem angetriebenen Messerrücken (11) zusammengefassten Obermesser (10), die über eine sich am Balkenrücken (1) abstützende Führung gelagert sind. Für eine Zusammenfassung der Untermesser (3) ist ein eigener Messerrücken (2) vorgesehen, der unabhängig von der Führung für die Obermesser (10) mit dem Balkenrücken (1) lösbar verbunden ist. Zwischen dem Balkenrücken (1) und dem Messerrücken (2) für die Untermesser (3) sind Anschläge (4, 5) zum reproduzierbaren Einsetzen des Messerrückens (2) vorgesehen.

Die Erfindung bezieht sich auf einen Mähbalken mit einem Balkenrücken und daran unbeweglich sitzenden Untermessern und mit demgegenüber auf einem angetriebenen Messerrücken zusammengefaßten Obermessern, die über eine sich am Balkenrücken abstützende Führung gelagert sind.

Derartige Mähbalken, insbesondere für kommunalen Betrieb, sind bekannt. Dabei sitzen die Untermesser, sei es in Form von Einzel- oder Doppelklingen, direkt auf dem Balkenrücken, an dem sie durch eine Verschraubung oder eine Vernietung befestigt sind. Gleichzeitig ist auf dem Balkenrücken auch eine Führung für die Obermesser abgestützt. Diese Führung besteht im einzelnen aus einer Grundplatte, einem Schwinghebelgehäuse und einem darin verschwenkbar angeordneten Schwinghebel, der mit einer Öse an einem Zapfenträger angreift, der seinerseits mit dem Messerrücken der Obermesser fest verbunden ist. Es versteht sich, daß über die Länge des Mähbalkens bzw. des Balkenrückens mehrere derartige Führungen in Abständen vorgesehen sind. Die Grundplatte jeder dieser Führungen ist bei der bekannten Ausführungsform mit den gleichen Schrauben oder Nieten am Balkenrücken befestigt, die auch die im Bereich der Führung angeordneten Untermesser auf dem Balkenrücken fixieren. Zum Auswechseln oder Nachschleifen beschädigter oder verschlissener Untermesser muß diese Verbindung des Balkenrückens zu den Führungen gelöst werden. Anschließend müssen die Führungen wieder paßgerecht montiert werden, wobei eine erhebliche Ausrichtarbeit entsteht. Es versteht sich, daß diese Arbeit nicht im Gelände, sondern nur in der Werkstatt durchgeführt werden kann. In der Regel wird diese Arbeit als derart umfangreich eingeschätzt, daß sie allenfalls einmal an einem Mähbalken außerhalb der Mähperiode durchgeführt wird, während in der Sommerzeit beim täglichen Einsatz des Mähbalkens das Auswechseln der Untermesser unterbleibt und nur jeweils die Obermesser ausgewechselt und nachgeschliffen werden, weil sich diese vergleichsweise leicht handhaben lassen. Beim Mähen im Gelände mit dem vorbekannten Mähbalken tritt insbesondere auf sandhaltigen Böden ein Verschleiß an den Ober- und an den Untermessern im Bereich der Schneiden auf, der sich mit fortgesetzter Gebrauchsdauer von den Schneiden in den Bereich der Messer hinein erstreckt. Da, wie bereits ausgeführt, die Obermesser im Gelände gewechselt werden, die Untermesser jedoch nicht, stumpfen die Schneidkanten der Untermesser mit steigender Einsatzdauer zunehmend ab, wodurch sich das Schneidergebnis verschlechtert.

Aus der DE-AS 12 90 757 und der DE-OS 17 57 479 ist ein
Mähschneidwerk einer anderen Gattung bekannt, nämlich mit
gegenläufig bewegten Ober- und Untermessern. Demzufolge
sind am Balkenrücken nicht nur Führungen für die Obermesser,
sondern auch davon getrennte Führungen für die Untermesser
vorgesehen. Ober- und Untermesser werden jeweils durch die
ihnen zugeordneten Schwinghebelführungen in Position gehalten.
Für die Befestigung der mit einem Messerrücken zusammengefaßten Untermesser am Balkenrücken eines Mähbalkens mit unbeweglichen Untermessern ist dies jedoch nicht anwendbar.

DIe US-PS 3 760 571 zeigt einen Mähbalken mit einem Balkenrücken, der mit dem Messerrücken aus einem Teil besteht und
mit auf einem Messerrücken zusammengefaßten Obermessern, die
demgegenüber beweglich angetrieben sind. Die Untermesser lassen
sich allein nicht auswechseln. Es ist immer der gesamte Balkenrücken auszubauen. Dies erfordert eine völlige Zerlegung des
ganzen Mähwerkes und eine neue Justierung der einzelnen Teile,
auch wenn nur ein einzelnes Messer ersetzt werden müßte.

Der Erfindung liegt die Aufgabe zugrunde, einen Mähbalken der
eingangs beschriebenen Art derart weiterzubilden, daß auch die
Untermesser draußen im Gelände leicht und schnell sowie ohne
Beeinträchtigung der Führung für die Obermesser ausgewechselt
werden können. Dabei soll es insbesondere möglich sein, die
Untermesser von oben zugänglich auswechseln zu können.

Erfindungsgemäß wird dies dadurch erreicht, daß für eine
Zusammenfassung der Untermesser ein eigener Messerrücken
vorgesehen ist, der unabhängig von der Führung für die Obermesser mit dem Balkenrücken lösbar verbunden ist, und daß

0121923

zwischen dem Balkenrücken und dem Messerrücken für die Untermesser Anschläge zum reproduzierbaren Einsetzen des
Messerrückens vorgesehen sind. Bei feststehenden Untermessern erscheint es zunächst widersinnig, neben dem Balkenrücken noch einen zugeordneten Messerrücken für die Untermesser vorzusehen, weil die Untermesser, wie bekannt, sowieso an dem Balkenrücken gelagert werden. Die Aufteilung des
Balkenrückens in einen Messerrücken und einen Rest-Balkenrükken bietet jedoch die Möglichkeit, diesen Messerrücken mit
den daran befestigten Untermessern gemeinsam zu handhaben,
also insbesonder auszuwechseln und nachzuschleifen. Dabei entsteht eine handliche Einheit, die leicht genug ist, so daß es
zumutbar ist, einen solchen Messerrücken mit nachgeschliffen_en
Untermessern ebenso ins Gelände mitzunehmen wie die auf einem
Messerrücken zusammengefaßten Obermesser. Der Messerrücken
für die Untermesser und der Balkenrücken ergeben zusammen eine
kompakte widerstandsfähige Einheit, auf der sich die Obermesser mit deren Messerrücken gleitend abstützen und bewegen
können. Da die Obermesser vielleicht einmal pro Tag und die
Untermesser vielleicht einmal pro Woche ausgewechselt werden
- bei entsprechendem Einsatz - läßt es sich ohne weiteres einrichten, daß der Austausch der Untermesser jeweils zusammen
mit einem Austausch der Obermesser durchgeführt wird. Dann
ergibt es sich, daß nach dem Hochheben der Führung für die
Obermesser und dem Wegnehmen des Messerrückens mit den Obermessern die Untermesser mit ihrem Messerrücken genauso einfach und schnell nach oben entfernt werden können, wie dies
an sich bei den Obermesser vergleichsweise schon üblich ist.
Vor allen Dingen sind auch die Untermesser von oben zugänglich
und es ist dabei nicht erforderlich, den Mähbalken aufzurichten oder irgendwelche Handgriffe von unten durchzuführen.
Beim Austausch der Ober- als auch der Untermesser wird die
Führung für die Obermesser nicht gelöst, also nicht in ihrer
Geometrie verändert, sondern nur ausgehängt, so daß sich nach
dem Einhängen verläßlich wiederum die Führung der Obermesser
einstellt. Dem gleichen Zweck dienen Anschläge, die zwischen
dem Balkenrücken und dem Messerrücken für die Untermesser
vorgesehen sind. Damit erhalten auch die Untermesser nach dem Auswechseln wieder reproduzierbar ihre genaue Lage und
Stellung relativ zu den Obermessern.

Die Untermesser können zweckmäßig auf dem eigenen Messerrük-
ken aufgenietet sein. Eine lösbare Verbindung nach Art einer
Schraubenverbindung ist hier nicht erforderlich. Die Nietung
läßt ein Nachschleifen besonders einfach zu, ohne daß sich
dabei die Messerklingen von dem Messerrücken lösen. Bei Bedarf ist es aber auch möglich, einzelne Klingen am Messerrükken der Untermesser auszutauschen, wenn beispielsweise eine
Klinge ausgebrochen ist o. dgl.

Zwischen dem Messerrücken für die Untermesser und dem Balkenrücken des Mähbalkens ist eine lösbare Schraubenverbindung
vorgesehen, so daß damit die Befestigung vereinfacht ist und
der Austausch mühelos durchgeführt werden kann. Die Schraubenverbindung ist ausschließlich für den Messerrücken für die
Untermesser vorgesehen. Die Führungen für die Obermesser
sind demgegenüber separat am Balkenrücken angeordnet, so daß
die Führungen nicht zugleich mit dem Messerrücken für die
Untermesser gelöst werden müssen. Insbesondere sind auf dem
Balkenrücken außerhalb der Befestigungsbereiche für die Führung der Obermesser Schrauben angeordnet; der Messerrücken
für die Untermesser weist den Schrauben zugeordnete randoffene Durchbrechungen für den Durchtritt der Schraubenschäfte
auf. Andere Ausführungsformen sind selbstverständlich auch
denkbar, jedoch gestattet es diese Ausführungsform, die
Schrauben nur teilweise zu lösen und den Messerrücken mit
den Untermessern abnehmen zu können, ohne daß die Schrauben
ihr Gewindeloch vollständig verlassen.

Der Messerrücken ist mit seinen Untermessern oben auf dem
Balkenrücken- dem Messerrücken der Obermesser zugekehrt - gelagert, damit der Messerrücken für die Untermesser von oben
zugänglich ist und nach dem Abnehmen der Obermesser nach oben
freiliegt. Damit ist es möglich, sowohl den Austausch der Obermesser als denjenigen der Untermesser von oben her durchzuführen, also in einem Zustand, wenn der Mähbalken sich auf der
Erde in seiner Arbeitsposition befindet.

Die Anschläge zwischen Balkenrücken und Messerrücken für die Untermesser können aus einer auf der Oberseite des Balkenrükkens angeordneten Stufe bestehen. Eine solche Stufe als Anschlag stellt sicher, daß nach dem Zusammenfügen der Balkenrücken und der Messerbalken für die Untermesser eine kompakte widerstandsfähige Einheit bilden, sich also die Teile gegenseitig verstärken bzw. unterstützen. Es sind aber auch andere Realisierungsmöglichkeiten für die Anschläge möglich. So können beispielsweise die randoffenen Durchbrechungen in Verbindung mit den Schraubenschäften als Anschläge benutzt werden. Es wäre auch möglich, den Balkenrücken nicht stufenförmig auszunehmen, sondern sein Rechteckprofil beizubehalten und beispielsweise ortsfest im Balkenrücken zu verankernde Spannbolzen vorzusehen, die dann in Verbindung mit dem Messerrücken für die Untermesser die Anschläge bilden können.

Die Erfindung wird anhand eines bevorzugten Ausführungsbeispiels weiter verdeutlicht. Es zeigen:

Fig. 1          einen Draufsicht auf einen Teil des Mähbalkens,
                teilweise geschnitten,

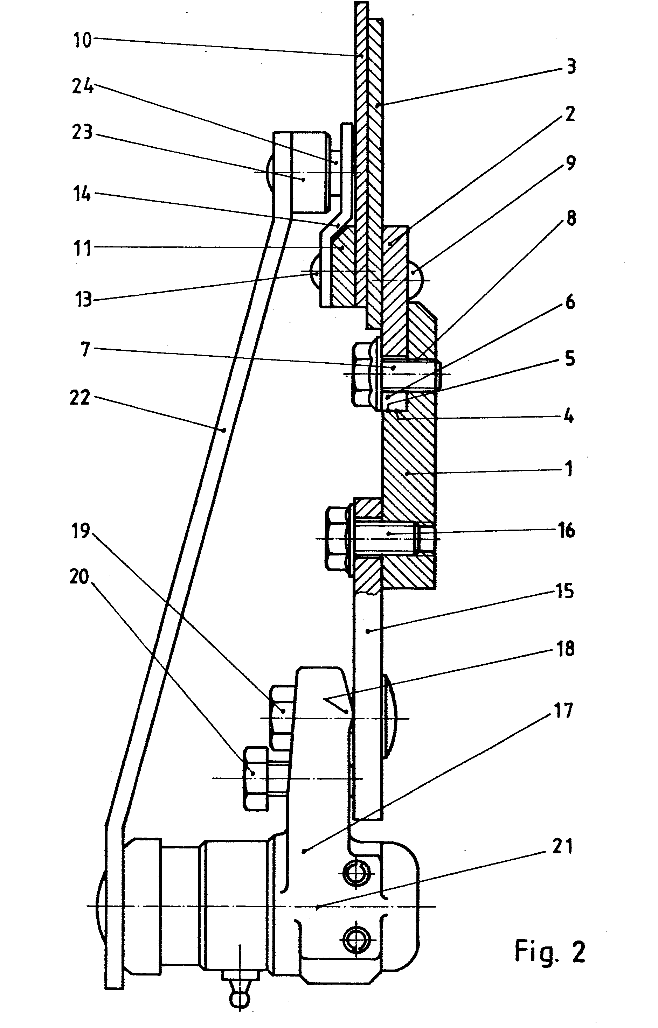

Fig. 2          eine Seitenansicht des Mähbalkens gemäß Fig. 1,
                teilweise geschnitten,

Fig. 3          eine Draufsicht auf einen Teil des Messerrückens
                mit den Untermessern,

Fig. 4          einen Schnitt gemäß der Linie IV-IV in Fig. 3,

Fig. 5          einen Querschnitt durch den Balkenrücken und

Fig. 6          einen Schnitt durch den Messerrücken mit den
                Obermessern.

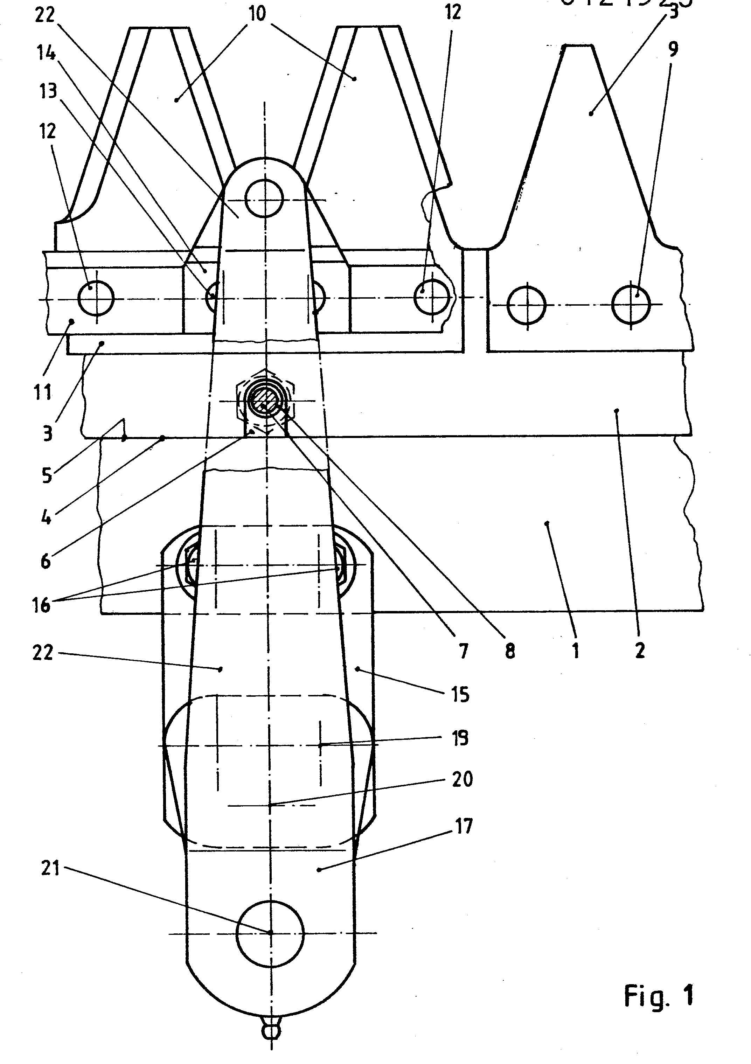

Fig. 1 zeigt nur einen kleinen Ausschnitt aus dem Mähbalken im Bereich einer Führung für die Obermesser. Der Mähbalken ist auf einem Balkenrücken 1 aufgebaut, der aus einem durchgehenden widerstandsfähigen Profil vergleichsweise großer Abmessung besteht. Auf diesem Balkenrücken 1 ist ein Messerrücken 2 für die Untermesser 3 gelagert. Der Querschnitt des Messerrückens 2 ergänzt den Querschnitt des Balkenrückens 1 und ist in eine Stufe 4 eingesetzt, so daß die nach rückwärts gerichtete Kante 5 des Messerrückens 2 damit einen Anschlag 4, 5 bildet. In dem Messerrücken 2 sind nach rückwärts randoffene Durchbrechungen 6 in Abständen über die Länge des Messerrückens 2 verteilt angeordnet, die mit Schrauben 7 zusammenarbeiten, die in entsprechende Gewindelöcher 8 im Balkenrücken 1 eingreifen. Man erkennt, daß nach dem geringfügigen Lösen der Schrauben 7 die Untermesser 3 mit ihrem Messerrücken 2 reproduzierbar in den Balkenrücken 1 eingesetzt und die Schrauben 7 festgezogen werden können. Die Untermesser 3, die hier aus Doppelklingen bestehen, sind mit Nieten 9 an dem Messerrücken 2 befestigt. Der Messerrücken 2 und die Untermesser 3 bilden eine abnehmbare und handhabbare Einheit. Die Untermesser 3 können deshalb leicht nachgeschliffen werden.

Zu den Untermessern 3 gehören Obermesser 10, die auf einem zugehörigen Messerrücken 11 zusammengefaßt sind, der ebenfalls über die Breite des Mähbalkens durchgeht. Auch die Obermesser 10 sind durch Niete 12 an dem Messerrücken 11 befestigt. Niete 13 halten in Abständen vorgesehene Zapfenträger 14, die zu einer Führung der Obermesser gehören. Die Obermesser 10 selbst können als Hohlklingen ausgebildet sein.

Auf dem Balkenrücken 1 ist unabhängig von der Anordnung des Messerrückens 2 für die Untermesser 3 im Bereich jeder Führung eine Grundplatte 15 mit Hilfe von zwei Schrauben 16 lösbar befestigt. Auf jeder Grundplatte 15 ist ein Schwinghebelgehäuse 17 angeordnet, welches mit einer Kippwulst 18 und zwei Schrauben 19 gelagert ist. Über eine Schraube 20 kann der Winkel zwischen dem Schwinghebelgehäuse 17 und der Grundplatte 15 eingestellt werden, so daß sich insbesondere die Achse 21 des Schwinghebelgehäuses 17 verändern und damit der Anpreßdruck der Führung variieren läßt. Im Schwinghebelgehäuse 17 ist ein Schwinghebel 22 um die Achse 21 schwenkbar gelagert, der mit einer an seinem vorderen Ende angeordneten
Buchse 23 einen Zapfen 24 am Zapfenträger 14 übergreift. Auf
diese Art und Weise wird eine Führung 14 bis 24 für den Messerrücken 11 der Obermesser 10 gebildet. Es versteht sich,
daß mehrere derartige Führungen 14 bis 24 verteilt über die
Breite des Mähbalkens vorgesehen sind. Die Schwinghebel 22
bestehen aus Federstahl, so daß es möglich ist, ihr freies
Ende mit der daransitzenden Buchse 23 von den Zapfen 24 abzuheben, wodurch der Messerrücken 11 mit den Obermessern 10
freikommt. Der Antrieb der Obermesser 10 geschieht in der bekannten Weise.

Zum Austausch der Obermesser 10 und der Untermesser wird wie
folgt verfahren. Bei in Arbeitsposition auf die Erde abgesenktem Mähbalken werden die Schwinghebel 22 der Führungen 14 bis
24 hochgehoben, wobei die entsprechende Gegenkraft auf den Messerrücken 11 der Obermesser 10 mit dem Fuß aufgebracht werden
kann. Die Schwinghebel 22 lassen sich dabei um etwa 90° um
die Achse 21 verschwenken, so daß die Einheit aus durchgehendem Messerrücken 11, den Obermessern 10 und den Zapfenträgern
14 freikommt und aus dem Antrieb für den Messerrücken 11 ausgehängt werden kann. Durch Lösen der Schrauben 7 um etwa eine
Umdrehung kommt der Messerrücken 2 der Untermesser 3 frei und
kann nach vorn herausgezogen werden. Eine neue Einheit aus
Messerrücken 2 und Untermessern 3 wird mit Hilfe der randoffenen Durchbrechungen 6 von vorn in den Balkenrücken 1 bzw.
auf diesen aufgesetzt, bis die Kante 5 an der Stufe 4 zur Anlage kommt. Damit ist die reproduzierbare Lage des Messerrückens 2 mit den Untermessern 3 hergestellt und die Schrauben 7 können wieder angezogen werden. Nach dem Auflegen einer
nachgeschliffenen Einheit aus Messerrücken 11, Obermesser 10
und Zapfenträgern 14 auf die Untermesser 3 werden die Schwinghebel 22 der Führungen 14 bis 24 wieder eingehängt, wobei
der Messerrücken 11 mit den Obermessern 10 gleichsam automatisch seine richtige Lage zu den Untermessern 3 einnimmt. Der
Mähbalken ist somit mit neuen bzw. nachgeschliffenen Untermessern 3 und Obermessern 10 bestückt und die ausgetauschten Einheiten lassen sich leicht aus dem Gelände mit in die Werkstatt mitführen und können dort ohne weiteres nachgeschliffen werden, so daß sie dann für einen Austausch im Gelände wieder zur Verfügung stehen.

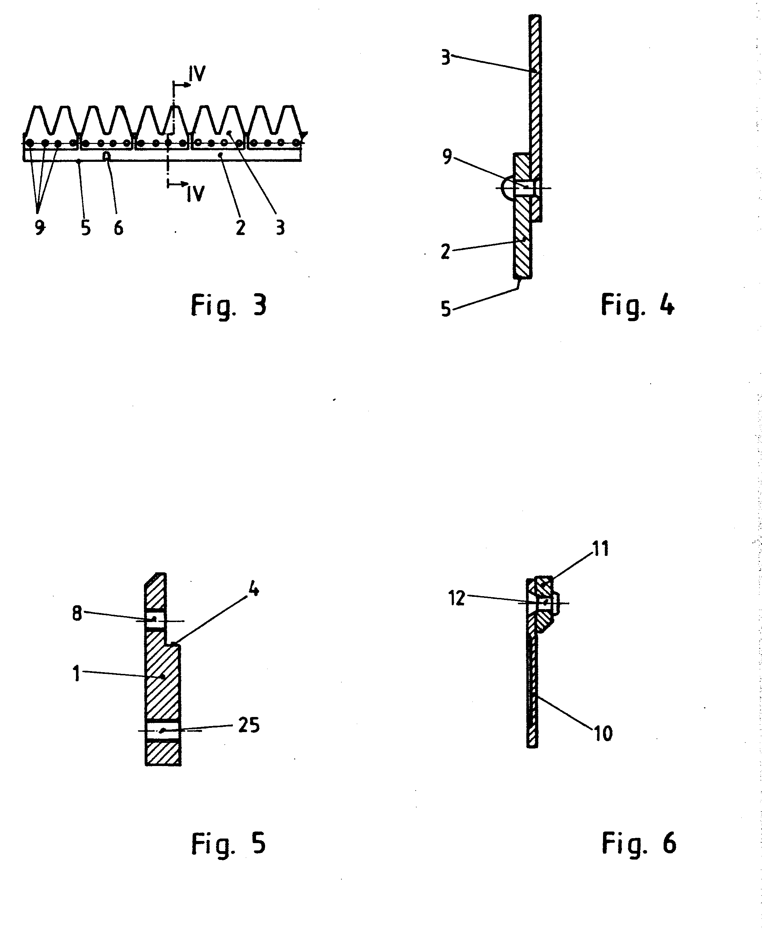

Fig. 3 zeigt eine Draufsicht auf einen Teil des Messerrückens 2 mit den als Doppelklingen ausgebildeten Untermessern 3, die durch Niete 9 gehalten sind. Man erkennt eine der randoffenen Durchbrechungen 6 im Bereich der rückwärtigen Kante 5 des Messerrückens 2. Aus Fig. 4 ist ersichtlich, wie die Untermesser 3 mittels der Niete 9 mit dem Messerrücken 2 verbunden sind.

Fig. 5 zeigt einen Querschnitt durch den Balkenrücken 1 mit den Gewindelöchern 8 für die Schrauben 7 und den Gewindelöchern 25 für die Schrauben 16 der Grundplatte 15.

Fig. 6 schließlich zeigt einen Schnitt durch die Obermesser 10 mit dem Messerrücken 11. Man erkennt, daß die Obermesser 10 als Hohlklingen ausgebildet sind und durch die Niete 12 am Messerrücken 11 gehalten sind.

# BIBRACH & REHBERG

## ANWALTSSOZIETÄT

BIBRACH & REHBERG, POSTFACH 738, D-3400 GÖTTINGEN

PATENTANWALT DIPL.-ING. RUDOLF BIBRACH
PATENTANWALT DIPL.-ING. ELMAR REHBERG

EUROPEAN PATENT ATTORNEYS
MANDATAIRES EN BREVETS EUROPÉENS

TELEFON: (0551) 45034/35
TELEX: 96616 bipat d
POSTSCHECKKONTO: HANNOVER
(BLZ 25010030) NR. 115763-301

BANKKONTEN: DEUTSCHE BANK AG GÖTTINGEN
(BLZ 26070072) NR. 01/85900
COMMERZBANK GÖTTINGEN
(BLZ 26040030) NR. 6425722

IHR ZEICHEN
YOUR REF.
VOTRE REF.

IHR SCHREIBEN VOM
YOUR LETTER
VOTRE LETTRE

UNSER ZEICHEN
OUR REF.
NOTRE REF.

D-3400 GÖTTINGEN,
PÜTTERWEG 6

11.405a/n3          4.4.1984

ESM Ennepetaler Schneid- und Mähtechnik GmbH & Co. KG,
Kölner Str. 29, 5328 Ennepetal 1

Mähbalken

## P a t e n t a n s p r ü c h e :

1. Mähbalken mit einem Balkenrücken und daran unbeweglich sitzenden Untermessern und mit demgegenüber auf einem angetriebenen Messerrücken zusammengefaßten Obermessern, die über eine sich am Balkenrücken abstützende Führung gelagert sind, dadurch gekennzeichnet, daß für eine Zusammenfassung der Untermesser (3) ein eigener Messerrücken (2) vorgesehen ist, der unabhängig von der Führung (14 bis 24) für die Obermesser (1o) mit dem Balkenrücken (1) lösbar verbunden ist, und daß zwischen dem Balkenrücken (1) und dem Messerrücken (2) für die Untermesser (3) Anschläge (4, 5) zum reproduzierbaren Einsetzen des Messerrückens (2) vorgesehen sind.

2. Mähbalken nach Anspruch 1, dadurch gekennzeichnet, daß die Untermesser (3) auf dem eigenen Messerrücken (2) aufgenietet sind.

3. Mähbalken nach Anspruch 1 und 2, dadurch gekennzeichnet, daß zwischen dem Messerrücken (2) für die Untermesser (3) und dem Balkenrücken (1) eine lösbare Schraubenverbindung (7, 8) vorgesehen ist.

4. Mähbalken nach Anspruch 3, dadurch gekennzeichnet, daß die Schrauben (7) auf dem Balkenrücken (1) außerhalb der Befestigungsbereiche für die Führung (14 bis 24) der Obermesser (1o) angeordnet sind, und daß der Messerrücken (2) für die Untermesser (3) den Schrauben (7) zugeordnete randoffene Durchbrechungen (6) für den Durchtritt der Schraubenschäfte aufweist.

5. Mähbalken nach Anspruch 3 oder 4, dadurch gekennzeichnet, daß der Messerrücken (2) mit seinen Untermessern (3) oben auf dem Balkenrücken (1) – dem Messerrücken (11) der Obermesser (1o) zugekehrt – gelagert ist.

6. Mähbalken nach Anspruch 1 und 5, dadurch gekennzeichnet, daß die Anschläge (4, 5) zwischen Balkenrücken (1) und Messerrücken (2) für die Untermesser (3) aus einer auf der Oberseite des Balkenrückens (1) angeordneten Stufe (4) bestehen.

7. Mähbalken nach Anspruch 1 und 5, dadurch gekennzeichnet, daß bei einem nicht stufenförmig ausgenommenen Balkenrücken (1) die Anschläge (4, 5) für den Messerrücken (2) der Untermesser (3) durch die randoffenen Durchbrechungen (6) im Messerrücken (2) und die im Balkenrücken (1) eingesetzten Schrauben (7) ersetzt sind.

Fig. 1

0121923

Fig. 2

Fig. 3

Fig. 4

Fig. 5

Fig. 6

# 0121923

Nummer der Anmeldung

## EUROPÄISCHER RECHERCHENBERICHT

**Europäisches Patentamt**

| EINSCHLÄGIGE DOKUMENTE | | | EP 84103949.8 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl. 3)** |
| P,X | US - A - 4 380 889 (ISBELL) <br> * Fig. 1,4 * <br> -- | 1-3 | A 01 D 55/02 |
| X | CH - A - 563 101 (AEBI & CO. AG) <br> * Gesamt * <br> -- | 1-4 | |
| X | CH - A - 528 853 (AEBI & CO. AG) <br> * Gesamt * <br> -- | 1-3 | |
| A | US - A - 3 664 103 (MC NAIR) <br> * Fig. 1-3,10,12 * <br> -- | 1-3 | |
| A | FR - A - 2 087 999 (BRUNETTI) <br> * Fig. 1,3,4 * <br> ---- | 1-3 | **RECHERCHIERTE SACHGEBIETE (Int. Cl. 3)** <br><br> A 01 D 55/00 |

Der vorliegende Recherchenbericht wurde für alle Patentansprüche erstellt.

| Recherchenort | Abschlußdatum der Recherche | Prüfer |
|---|---|---|
| WIEN | 18-06-1984 | SCHWAB |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82